# EUROPEAN PATENT APPLICATION

(11) **EP 4 155 278 A1**
(43) Date of publication of application: **29.03.2023**
(21) Application number: 21198297.0
(22) Date of filing: 22.09.2021
(51) Int. Cl.: C04B 14/26, C04B 20/02, C04B 28/04, C04B 28/06, C04B 103/00

(54) **IMPROVING REACTIVITY OF CARBONATED RECYCLED CONCRETE FINES**

(71) Applicant: HeidelbergCement AG, 69120 Heidelberg (DE)
(72) Inventor: ZAJAC, Maciej, 69126 Heidelberg (DE); SKOCEK, Jan, 69151 Neckargemünd (DE)
(74) Representative: Zellentin & Partner mbB Patentanwälte

(57) **Abstract**

Method for manufacturing a supplementary cementitious material with improved reactivity from waste concrete, wherein a starting material comprising waste concrete is provided, subjected to carbonation to provide a carbonated product, and the carbonated product is heat treated at a temperature ranging from 120 to 350 °C until constant mass to provide the supplementary cementitious material with improved reactivity, the obtained supplementary cementitious material, a method using it as well as its use to manufacture composite cements and composite cements comprising it.

## Description

The present invention relates to a method for manufacturing a supplementary cementitious material with improved reactivity from waste concrete, the obtained supplementary cementitious material, a method using it to manufacture composite cements, its use in composite cements as well as composite cements comprising it.

Cement industry is struggling with the high CO₂ emissions related to the production of the cement clinker. The easiest solution to limit this environmental footprint is to produce composite cements, wherein clinker is replaced by supplementary cementitious materials (abbreviated SCM). Unfortunately, the increase of the proportion of composite cements in the product portfolio is limited by the availability of high quality SCMs, i.e. reactive materials resulting in appreciable strength evolution.

Another issue are the increasing amounts of concrete demolition waste. The usual approach is a crushing of the raw waste, removal of foreign materials like wood, plastic, and metal, and grinding to separate the recycled concrete into a coarse fraction containing most of the aggregate and a fine fraction containing the hardened cement and varying amounts of fine aggregate. Utilization of the recycled concrete aggregates is possible with established methods. It achieves higher sustainability and preserves the resources of the natural aggregates. However, the application of the recycled concrete paste (abbreviated RCP), forming a substantial part of the recycled concrete fines (abbreviated RCF), is limited. If used as filler or aggregate they result in inappropriate characteristics of the paste, predominantly a high water demand. This problem can be solved by carbonation. Recycled concrete paste can be easily carbonated at normal pressure and temperature. In just a few hours, an almost complete carbonation of the RCP can be achieved in a wet reactor and carbonation degrees of more than 80 % already in less than 30 minutes. The main carbonation product is calcium carbonate. The second product of carbonation is a silica gel and/or an alumina-silica gel. These gels are XRD amorphous phases with a structure composed of almost fully condensed SiO₄ tetrahedra, in the case of alumina-silica gel (i.e., Q³(mAl) and Q⁴(nAl) sites) incorporating Al(-OSi)₄ units. These structural fragments are found in several other types of SCMs like fly ashes, slags and calcined clays and particularly in silica fume. Thus, the carbonated concrete paste should be suitable as SCM. Nonetheless, many proposals in the prior art merely use it as filler and carbonation does not provide a reliably reactive SCM. Carbonated cement paste contains other products like for example hydrotalcite, or unreacted phase from the original cement or paste, however, in small quantities.

Numerous proposals have been made to improve SCM reactivity of the carbonated product which in turn allows higher clinker replacement or provides composite cements with higher reactivity. Among them are special processes as in EP 3 744 700 A1 or addition of substances that improve the carbonation process as in EP 3 778 525 A1. Further proposals are found in the documents cited therein.

In spite of successes achieved with these known methods and devices, there is an ongoing need to simplify processes and to ensure high reactivity of the carbonated product.

Surprisingly it was now found that a heat treatment of the carbonated product, following or ideally replacing the drying step, provides higher reactivity, a strength increase of composite cements in the range of 5 to 10 % was measured.

Thus, the above objects are met by a method for manufacturing a supplementary cementitious material with improved reactivity from waste concrete, wherein a starting material comprising waste concrete is provided, subjected to carbonation to provide a carbonated product, and the carbonated product is heat treated at a temperature ranging from 120 to 350 °C until constant mass, resulting in typical residence time between 1 minute and 10 hours, to provide the supplementary cementitious material with improved reactivity. The problem is further solved by the obtained supplementary cementitious material, a method using it as well as its use to manufacture composite cements and by composite cements comprising it.

Conventional wisdom in the art dictates to dry the carbonated product at a temperature high enough to ensure fast drying but as low as possible to save heating energy, i.e. at about 100 to 105 °C. It was very unexpected that higher temperatures from 120 to 350 °C improve reactivity. Higher temperatures such as 400 °C result in an SCM with less reactivity. The advantage of the method according to the invention is that the improved reactivity is achieved with a mere adjustment of temperature in a step performed anyway. Further, the necessary temperature is quite moderate as compared to that needed for e.g. calcining of clay.

To simplify the description the following abbreviations that are usual in the field of cement are used herein: H - H₂O, C - CaO, A - Al₂O₃, F - Fe₂O₃, M - MgO, N - Na₂O, K - K₂O, S - SiO₂ and $ - SO₃. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement designates a material that, after mixing with an aqueous liquid to form a paste, is able to develop mechanical strength by hydraulic reaction. Thus, cement mostly denotes a clinker ground with or without further components, but also mixtures like super sulphated cement, geopolymer binder, and hydraulic materials not obtained by sintering like a dicalcium silicate obtained by hydrothermal treatment. Composite cement or binder mixture means a mixture containing cement and a supplementary cementitious material. A cement, composite cement or binder is usually used adding water or another liquid and mostly also aggregate. Typically, admixtures and/or additives are added to the binder and/or the paste.

A supplementary cementitious material is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

Hydraulically hardening building material means a wet mixture that is able to harden hydraulically, and comprises a cement or binder as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material, e.g. a pre-cast concrete element or a floor or a bridge part from cast in place concrete.

A supplementary cementitious material (SCM) is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

According to the present invention, the reactivity of carbonated waste concrete as SCM is improved by a heat treatment after carbonation, that completes or replaces drying. Thus, SCM are obtained from waste concrete which allow a higher clinker replacement ratio or result in higher strength of building materials made with composite cements containing it.

The method uses waste concrete obtained as known per se to provide the starting material. Waste concrete covers all materials that occur in the use of cement, binder and hydraulically hardening building materials. One typical example is concrete demolition waste. Further examples are remains from hydraulically hardening building materials, like concrete and mortar prepared and then superfluous, and solid parts in the waste from cleaning devices for concreting, like concrete trucks, mortar mixers, and moulds for precast concrete parts. It is contemplated that other waste materials of similar composition as waste concrete, i.e. rich in carbonatable Ca and/or Mg phases, e.g. hydrates, fly ashes, slags and mixtures thereof, can be carbonated to provide highly reactive SCM in the same way as waste concrete or supplement it in the starting material. Rich in carbonatable Ca and/or Mg phases means that at least 12.5 wt.-% of the waste material calculated as oxides is CaO and/or MgO and at least 80 wt.-% of the CaO and MgO is in carbonatable phases before carbonation. Preferably, CaO and/or MgO constitute at least 20 wt.-%, more preferably at least 30 wt.-% and most preferred at least 50 wt.-% of the waste material. Preferably, at least 85 wt.-%, more preferably at least 90 wt.-% of the CaO and MgO are in carbonatable phases. Thus, while a part of the carbonatable CaO and MgO in the waste material might be already carbonated before carbonation, at least 10 wt.-% of the material calculated as oxides is carbonatable but not yet carbonated CaO and/or MgO.

A preferred waste concrete is concrete demolition waste. Concrete demolition waste designates the crushed material obtained during demolition of concrete containing structures like buildings and road surfaces from which the foreign materials like wood, metal parts, brick parts, and plastic, have been substantially completely removed. According to the invention, the fines resulting from concrete demolishing are useful as starting material. Recycled concrete fines (abbreviated RCF) designates the material obtained after crushing concrete demolition waste and separating the particles reusable as aggregate and, if applicable, any foreign matter contained. The exact composition and particle size distribution of the concrete fines depends on the original binder and composition used in the concrete and on the demolishing and grinding procedures applied. Usually, the original aggregate is separated as much as possible and the RCF contain mostly the ground hardened binder paste together with fine sand/aggregates, usually in amounts of 30 to 80 wt.-% of the total material weight.

Another preferred waste concrete is concrete residues arising during building, e.g. but not limited to unused ready mix concrete and left over mortar. The residues are crushed to separate hardened cement paste from aggregate, and the finer fraction - optionally ground - provides the starting material according to the invention. Also cement that has been stored too long and partially hydrated is useful, if needed after crushing and/or grinding. Further, the waste arising during cleaning of devices used in concreting, e.g. molds for manufacturing pre-cast concrete elements, especially the filter cake from pre-cast plants, is suitable, if needed after crushing and/or grinding.

The starting material can be provided from one waste concrete or by mixing and/or co-grinding several waste concrete materials as well as other materials rich in carbonatable Ca and/or Mg phases. Typically, it is easier to use only one source, but using two or more allows optimization of the composition and converting otherwise unsuitable materials, i.e. ones that could not be used on their own. In one embodiment the starting material consists of one waste concrete or of a mixture of two or more waste concretes.

It is advantageous when the starting material contains high amounts of carbonatable phases, specifically of hardened paste, e.g. at least 30 wt.-%, or at least 40 wt.-%, or at least 50 wt.-%, or at least 60 wt.-%, or at least 70 wt.-%, or at least 75 wt.-%.

The particle size of the starting material is not specifically critical, however, as finer materials are usually carbonated faster a D₉₀ of ≤ 300 µm, preferably ≤ 150 µm, most preferred ≤ 100 µm is typically desired. If the starting material has not the desired particle size distribution (abbreviated PSD), it can be easily adjusted with methods and devices known per se, like grinding, sieving, or classifying or combination of them. Particle size distribution is measured by sieving for sizes above 2 mm herein and determined by laser granulometry for sizes below 1 mm. In the 1 - 2 mm range the method is chosen depending on the particle size range of the material. For ranges extending mainly above 1 mm sieving is commonly applied, for ranges extending mainly below 1 mm laser granulometry is typically better.

It is possible to include additional material into the starting material that accelerates the carbonation process and/or improves the final properties of the SCM or the building material made with it. This also applies to the embodiment where the starting material consists of one or more waste concrete(s).

Typically, additional material will be included in an amount from 0.001 to 1 wt.-% with respect to the total starting material. Usually, substances that improve the properties of the composite cement or hydraulic building material are added to the cement or building material, but some can also accelerate the carbonation. In the latter case their addition to the starting material is advantageous. Preferably, substances for enhancing the carbonating process or mixtures of two or more thereof are used as additional material.

Suitable materials include substances that improve dissolution of CO₂ in the solution like alkanolamines, for example primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures thereof; halogenides; ethylenediaminetetraacetic acid (EDTA) or others. Additionally, enzymes such as carbonic anhydrase can be used to enhance carbonation efficiency and modify the properties of the reaction products. It is to be noted that these additions may have not only one action but can exercise a double role. They can e.g. modify the hydration process of the final binder as well as modify the carbonation process. The effect can largely depend on the dosage.

Moreover it is possible to add substances that regulate the pH during the carbonation process in order to enhance the precipitation of calcium carbonate. These include metal hydroxides and carbonates and similar substances.

Further, it is possible to add substances that modify the morphology of the precipitating calcium carbonate during the carbonation process. This provides the advantage of building less dense shales of hydrates-carbonates product and enables higher carbonation and hydration degrees. Suitable are for example magnesium salts, polyacrylic acid, polyacrylamide, polyvinyl alcohol, polyvinylsulfonic acids, styrenesulfonate, citric acid and other organic acids, polysaccharides and phosphonates, polycarboxylates.

Furthermore, it is possible to add admixtures that modify properties of the hydraulic building material or the building structure made from the composite cement comprising the SCM according to the invention already to the starting material (usually those will be added to the building material or cement).

Often used admixtures are water reducing agents and plasticizers like for example, but not exclusively, organic compounds with one or more from carboxylate, sulfonate, phosphonate, phosphate or alcohol functional groups. These serve to achieve a good consistency, i.e. flowability, of the paste with a smaller amount of water. Since a decrease of water/binder ratio normally provides an increase of strength, such admixtures are commonly used.

Air entraining agents are also able to improve flowability and can be used for this aim or for other reasons such as, but not limited to, density modifications, compactibility improvements etc. Useful air entraining agents are e.g. surface active substances, especially ones based on soaps from natural resins or synthetic nonionic and ionic tensides.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides).

It is also possible to add admixtures that are designed to modify the rheology properties, i.e. rheology modifiers like polycarboxylates, lignosulfonates, starch, Karoo gum, bentonite clay, polyvinyl alcohol, and mixtures thereof.

All admixtures are used in the amounts known as such, wherein the amount is adapted to a specific binder and special needs in the known manner.

Additives can be added as well to the starting material, but usually those are added to the composite cement or the hyraulic building material. Usual and useful additives are e.g. fillers (especially limestone and other stone dusts), pigments, reinforcing elements, self-healing agents etc. All these can be added in the amounts known per se.

Not prior published EP 21176008.7 proposes a combination of hydrothermal treatment and carbonation to enhance and accelerate the carbonation of recycled waste concrete increasing its CO₂ uptake and activating also parts of the contained aggregates to become reactive as SCM in the case of silicate and/or alumino-silicate containing aggregate. Thus, in one preferred embodiment, the starting material comprising hydrated cement and aggregate containing silicates and/or alumino-silicates is hydrothermally treated as described in EP 21176008.7.

Specifically, the starting material is hydrothermally treated, i.e. heated in the presence of water. The water-solid weight ratio in the aqueous mixture is equal to or larger than 0.1. Preferably, the water-solid ratio is in the range from 0.25 to 4 and more preferred from 0.3 to 2.0. The amount of water is adjusted such that a full hydration of the solids can be achieved. The temperature during the hydrothermal treatment is usually set in the range from 25 to 400 °C, preferably in the range from 75 to 350 °C. According to a particularly preferred embodiment the temperature is in the range from 75 or 100 to 300 °C or 250 °C. The pressure during the hydrothermal treatment is preferably endogenous, i.e. the pressure that sets itself during the treatment at the selected temperature. It can also be kept constant. Typically the pressure is in the range from 1 to 25 bar, preferably from 2 to 20 bar. All pressures indicated herein are absolute pressures. It is possible to carry out the hydrothermal treatment under stirring and/or grinding to prevent settling of the solids and/or to provide fresh, non-reacted surface area. The treatment can last from minutes to hours depending on the specific starting materials, the pressure, the temperature and additional material if such is added. Typically the treatment time may vary from 30 minutes to 48 hours. According to a particular embodiment, it is in the range from 2 to 36 hours.

The starting material is then subjected to carbonation. Aqueous or semi-dry carbonation processes are preferred. Suitable devices and conditions are known as such and have been described in the prior art. Especially useful are for example, but not limited to, the processes and devices described in EP 3 498 681 A1, EP 3 581 257 A1, EP 3 656 750 A1, EP 3 744 700 A1, EP 3 750 619A1, and EP 3 778 525 A1, all of which are incorporated herein by reference in their entirety.

One preferred method is a direct aqueous carbonation process. For this, the starting material is mixed with water unless it is already in the form of an aqueous suspension. The water solid weight ratio of the suspension usually ranges from 0.5 to 50. Typically, carbonation takes place at ambient pressure, with a temperature ranging from 1 to 99 °C, and a CO₂ concentration in the gas introduced into the suspension from 1 to 99 Vol.-%. Preferably, the suspension contains additional material such as alkali compounds, sulfates, chlorides and/or other organic or inorganic substances allowing improvement of the carbonation product or the properties of the novel SCM as described previously. Preferably, the concentration of CO₂ in gas during carbonation should range from 2 Vol.-% to 98 Vol.-%, most preferred from 3 Vol.-% to 97 Vol.-%.The temperature during carbonation usually ranges from ambient, e.g. 15 °C to 30 °C or 50 °C or 80 °C or 99 °C. Preferably carbonation takes place at ambient temperature. Carbonation can also serve to cool an exhaust gas used to provide the carbon dioxide. In that case, usually higher temperatures result in the carbonation device. Sulphates and chlorides added to the carbonation solution to optimize the final properties of the carbonated concrete paste are preferably added in amounts resulting in a final content of SO₃ and Cl⁻ lower than 10 wt.-% and 2 wt.-%, respectively.

In another preferred embodiment a so called semi-dry carbonation is applied. Therein, carbonation typically takes place at ambient pressure, with a temperature ranging from 21 to 99 °C, a CO₂ concentration in the introduced gas from 1 and 99 Vol.-% and a RH from 50 and 100 %. The concentration of CO₂ during carbonation should preferably range from 2 Vol.-% to 98 Vol.-%, most preferred from 3 Vol.-% to 97 Vol.-%. The temperature during carbonation usually ranges from ambient, e.g. 15 °C to 30 °C or 50 °C or 80 °C or 99 °C. The relative humidity during carbonation ranges preferably from 60 % to 100 %, most preferred from 80 % to 100 %.

In both embodiments the pressure may be increased depending on the needs. For example, an overpressure up to 100 bar, preferably up to 10 bar, can be used.

The carbon dioxide for use in the method according to the invention can be introduced in gaseous, liquid, solid or supercritical form. The CO₂ used for the carbonation can be used in pure form or in the form of mixtures with other gases, such as air, oxygen, nitrogen or argon. Preferred are carbon dioxide-comprising gas mixtures available on an industrial scale. Particularly preferred are exhaust gases from cement or lime plants, coal or gas fired power plants, and waste incinerators.

The described carbonation methods are carried out in devices known as such. Typically, carbonation times from a few minutes, like 1, 2, 5, or 10 minutes, to several hours, like 1, 2, 5, 10 or 20 hours, are suitable. Any other method for carbonation is likewise suitable.

The obtained carbonated product contains calcium carbonate, silica gel, and alumina-silica gel, possibly starting material left uncarbonated due to the chosen conditions as well as those components from the starting material that cannot be converted by carbonation. A carbonation degree of at least 50 %, preferably at least 75 % is usually aimed at, since a high carbonation degree optimizes both carbon dioxide sequestration and reactivity of the SCM. Carbonation degree is defined herein as the ratio of the calcium and magnesium in carbonates formed during carbonation to the carbonatable calcium and magnesium in the starting material.

The carbonated product can optionally be de-agglomerated and/or dried before the heat treatment. De-agglomeration is beneficial as it provides finer material for the heat treatment, allowing shorter times. Additionally, the SCM should have a fine PSD, so when deagglomeration is applied it is preferably applied before heat treating. Drying typically occurs at a temperature from 75 to 115 °C, preferably from 100 to 105 °C.

Finally, the carbonated product is heat treated at a temperature from 120 to 350 °C, preferably from 150 to 300 °C, most preferred from 180 to 250 °C. Heat treatment is carried out until constant mass, i.e. until the mass change is less than 5 % and preferably 1 % upon heating or for a given time between 1 minute and 10 hours and preferably between 10 minutes and 5 hours.

The method according to the invention allows the transformation of hydrated cement paste into mainly calcite (other forms of calcium carbonate are possible) and reactive amorphous silica and silica-alumina gels. Also, small aggregate can be transformed when it contains silicate and/or alumino-silicate and the feed material is autoclaved. The silica and silica-alumina gels are hydrated when dried at normal temperature in the prior art. According to the invnetion, the post carbonation heat treatment not only removes the water (the change of mass is in the range of -0.5 to -2 % of the total sample mass) but also activates the carbonated product which increases the compressive strength of hydrated composite cement samples by 5 % to 10 %, when compared to the carbonated product without heat treatment.

Thus, a supplementary cementitious material obtained from waste concrete carbonation by the method according to the invention differs from one obtained according to the prior art. An SCM according to the invention comprises silica and silica-alumina gels with higher reactivity. Therefore, using it to make composite cements also provides novel composite cements with higher reactivity.

The obtained supplementary cementitious material can be ground to adjust the particle size distribution. The obtained supplementary cementitious material preferably has a particle size distribution with a D₉₀ from 10 µm to 500 µm, more preferably from 10 µm to 200 µm, especially from 25 µm to 90 µm.

Further embodiments of the invention are a method for manufacturing a composite cement comprising the supplementary cementitious material obtainable by the method according to the invention, the use of the SCM for this and a composite cement comprising it blended with a hydraulic cement.

The hydraulic cement is preferably selected from Portland cement, Portland composite cement, calcium sulfoaluminate cement, calcium aluminate cement and dicalcium silicate cement. Preferred hydraulic cements are Portland cements according to DIN EN 197-1, calcium sulfoaluminate cement and calcium aluminate cement. Especially preferred are Portland cements according to DIN EN 197-1.

Typically, the composite cement obtained from blending an SCM according to the invention with a hydraulic cement comprises from 5 to 95 wt.-% cement and from 95 to 5 wt.-% SCM. Preferably, it contains from 30 to 90 wt.-% cement and from 70 to 10 wt.-% SCM, more preferred from 50 to 80 wt.-% cement and from 50 to 20 wt.-% SCM. In addition, usual admixtures and/or additives as described above for adding to the starting material can be added to the composite cement. The composite cement can also comprise one or more other SCM, i.e. the composite cement can be a ternary, quaterenary, or even more components blend. Suitable other SCM are e.g. but not limited to fly ash, ground granulated blast furnace slag, and calcined clay. Naturally, the amounts of all components in a specific composite cement add up to 100 %, so if SCM and hydraulic cement are the sole components their amounts add up to 100 %, when there are other components, the amount of SCM and hydraulic cement is less than 100 %.

For use, the composite cement is transformed into a hydraulic building material, e.g. into mortar or concrete, by mixing with water. Typically, a water to binder weight ratio (w/b) from 0.1 to 1, preferably from 0.15 to 0.75, and more preferred from 0.35 to 0.65 is used. The SCM according to the invention and - if applicable one or more further SCMs that are optionally added - are included into the amount of binder for calculating the w/b ratio. The mortar or concrete usually also contains aggregates as well as optionally admixtures and/or additives. Admixtures and additives have been described before.

The composite cement is useful for all applications where ordinary Portland cement and known composite cements are used, especially concrete, mortar, and construction chemical products such as screed, tile adhesive etc.

Usually, aggregate and admixtures are added when making a hydraulically hardening building material like concrete or mortar from the composite cement according to the invention. The known aggregate and usual admixtures are used in the usual amounts. For construction chemical products like floor screed or tile adhesive any necessary aggregate and admixture is typically added to the composite cement to form a dry mix, as far as possible. The aggregate and admixture are chosen depending on use in a manner well known per se.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example

Recycled cement paste was mimicked by well hydrated and ground cement pastes prepared in the laboratory. A cement paste was produced at suitable w/c assuring proper paste preparation and high hydration degree. The pastes were hydrated for several months. After that the hardened product was dried and ground to mimic the particle size distribution of an industrial recycled concrete paste. Such material was carbonated in a small (200 ml) wet reactor in 0.25 M sodium sulfate solution and then heated at 50 °C, 100 °C, 150 °C, 200 °C, 300 °C and 400 °C to constant mass. The obtained SCM samples are labelled respectively. After carbonation and heat treatment the SCM were ground to adjust a D₉₀ of about 60 µm. The amounts of bound water (BW), determined as mass loss between 50 ° and 200 °C and expressed as part of starting mass of the sample, are presented in table 1.

**Table 1**

| Sample | 50 °C | 100 °C | 150 °C | 200 °C | 300 °C | 400 °C |
|---|---|---|---|---|---|---|
| BW | 3.5 % | 2.3 % | 1.3 % | 1.1 % | 0.9 % | 0.9 % |

It is noticeable that the change in bound water content was very limited and cannot explain the observed changes in reactivity.

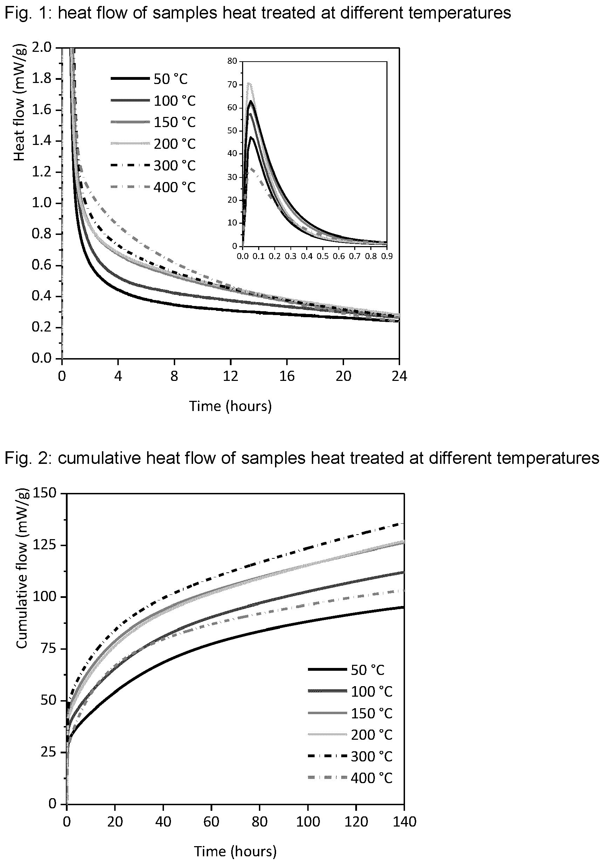

The pozzolanic reactivity of the samples was evaluated in synthetic cements containing 40 wt.-% portlandite, 59 wt.-% SCM sample, and 1 wt.-% NaOH as activator. Synthetic cement pastes were prepared at w/b = 0.8. The hydration reaction was characterized by means of calorimetry technique. Calorimetry data in figure 1 and figure 2 shows that the samples treated at higher temperature had higher total heat flow, i.e. the treatment influences the reactivity.

For the compressive strength measurements, composite cements were made from an industrial Portland clinker from regular production. The clinker was ground in a laboratory ball mill to achieve a Blaine fineness close to 4000 cm²/g. The cement composition was 60 wt.-% cement clinker and 40 wt.-% SCM, while the sulfate level of the composite cements was kept constant and equal to 3.2 wt.-% SO₃, wherein sulfate in the SCM was not taken into account. Compressive strength was tested in micro mortars (2 cm x 2 cm x 2 cm) prepared at w/b = 0.5.

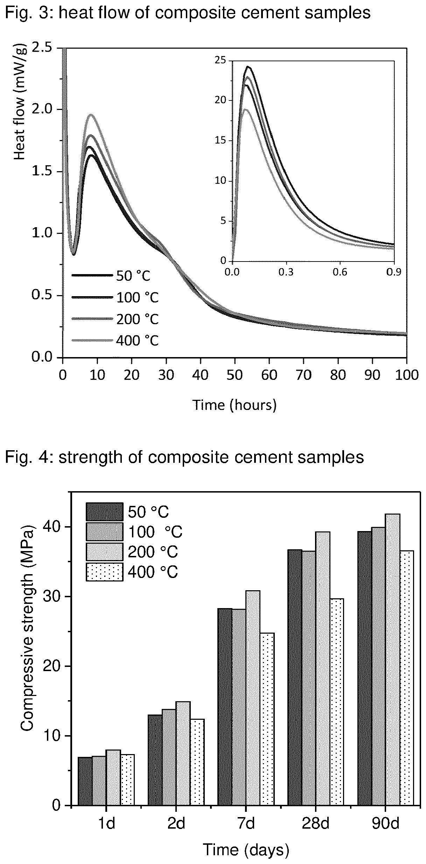

The evolution of the heat flow of the composite cements is shown in figure 3. The thermal treatment of carbonated waste concrete had a pronounced impact on the heat evolution of the cements. The first effect decreased as the temperature increased. This indicates that the intensity of initial reactions of the composite cement was reduced. A similar effect was observed in the synthetic cements (figure 1). Contrary to that, the main hydration peak increased with increasing temperature.

The evolution of compressive strength is shown in figure 4. The compressive strength of the samples containing carbonated waste concrete treated at higher temperature increased up to 200 °C. A temperature of 400 °C had a negative impact on the compressive strength.

## Claims

1. Method for manufacturing a supplementary cementitious material with improved reactivity from waste concrete, wherein a starting material comprising waste concrete is provided, subjected to carbonation to provide a carbonated product, and the carbonated product is heat treated at a temperature ranging from 120 to 350 °C until constant mass to provide the supplementary cementitious material with improved reactivity.

2. Method according to claim 1, wherein the starting material comprises one or more of:
- concrete demolition waste,
- remains from hydraulically hardening building materials, like concrete and mortar prepared and then superfluous,
- solid parts in the waste water from cleaning devices for concreting, like concrete trucks, mortar mixers, and moulds for precast concrete parts,
- waste materials of similar composition, i.e. rich in carbonatable Ca and/or Mg phases, like hydrates, fly ashes, slags and mixtures thereof.

3. Method according to claim 1 or 2, wherein the particle size of the starting material is adjusted to a D₉₀ of ≤ 300 µm, preferably ≤ 150 µm, most preferred ≤ 100 µm, by mechanical treatment, especially by grinding, sieving, and/or classifying.

4. Method according to one of claims 1 to 3, wherein the starting material is hydrothermally treated prior to carbonation, preferably in a temperature range from 25 to 400 °C and/or at a water solid-ratio from 0.2 to 4 and/or for 30 minutes to 48 hours and/or at an absolute pressure in the range from 1 to 25 bars.

5. Method according to one of claims 1 to 4, wherein additional material is added into the starting material, which accelerates the carbonation process and/or improves the final properties of the supplementary cementitious material or a composite cement or hydraulic building material made with it.

6. Method according to claim 5, wherein the additional material is selected from substances that improve dissolution of CO₂ like alkanolamines; halogenides; ethylenediamine tetraacetic acid; enzymes such as carbonic anhydrase; substances that regulate the pH during the carbonation process like metal hydroxides and carbonates; substances that modify the morphology of the precipitating calcium carbonate like magnesium salts, polyacrylic acid, polyacrylamide, polyvinyl alcohol, polyvinylsulfonic acids, styrenesulfonate, citric acid and other organic acids, polysaccharides and phosphonates, polycarboxylates; admixtures like water reducing agents, plasticizers, retarders; air entraining agents; rheology modifiers; additives like fillers, pigments, reinforcing elements, self-healing agents; and mixtures of two or more thereof.

7. Method according to one of claims 1 to 6, wherein the carbonated product is deagglomerated and/or dried before heat treating.

8. Method according to one of claims 1 to 7, wherein the temperature set during heat treating ranges from 150 to 300 °C, preferably from 180 to 250 °C.

9. Supplementary cementitious material obtainable by a method according to one of claims 1 to 8.

10. Supplementary cementitious material according to claim 9, having a particle size distribution with a D₉₀ from 10 µm to 500 µm, preferably from 10 µm to 200 µm, especially from 25 µm to 90 µm.

11. Method for manufacturing composite cements, wherein a supplementary cementitious material according to claim 9 or 10 is provided, a hydraulic cement is provided and blended with the supplementary cementitious material.

12. Use of a supplementary cementitious material obtainable by a method according to one of claims 1 to 8 for manufacturing composite cements, wherein the supplementary cementitious material according to claim 9 to 10 is provided, a hydraulic cement is provided and blended with the supplementary cementitious material.

13. Composite cement comprising a supplementary cementitious material obtainable by a method according to one of claims 1 to 8 and a hydraulic cement.

14. Method according to claim 11, use according to claim 12 or composite cement according to claim 13, wherein the hydraulic cement is selected from Portland cement, Portland composite cement, calcium sulfoaluminate cement, calcium aluminate cement and dicalcium silicate cement, preferably from Portland cements according to DIN-EN 197-1, calcium sulfoaluminate cement and calcium aluminate cement, especially preferred from Portland cements according to DIN EN 197-1.

15. Method according to claim 11 or 14, use according to claim 12 or 14 or composite cement according to claim 13 or 14, wherein the composite cement comprises from 5 to 95 wt.-% hydraulic cement and from 95 to 5 wt.-% supplementary cementitious material, preferably from 30 to 90 wt.-% hydraulic cement and from 70 to 10 wt.-% supplementary cementitious material, most preferred from 50 to 80 wt.-% cement and from 50 to 20 wt.-% supplementary cementitious material.
